# EUROPEAN PATENT APPLICATION

(11) **EP 1 821 496 A1**
(43) Date of publication of application: **22.08.2007**
(21) Application number: 07380036.9
(22) Date of filing: 13.02.2007
(51) Int. Cl.: H04L 29/06, H04L 29/08

(54) **A system for invoking Web services by means of SIP signalling.**

(30) Priority: 20.02.2006 ES 200600399
(71) Applicant: Vodafone Group PLC, Newbury Berkshire RG14 2FN (GB); Vodafone Espana, S.A., 28108 Alcobendas, Madrid (ES)
(72) Inventor: Berna Fornies, Hector, 50018 Zaragoza (ES); Caudevilla Laliena, Guillermo, 22003 Huesca (ES); Machin Garcia, Angel, 5006 Zaragoza (ES); Sanclemente Abos, Luis, 22003 - Huesca (ES)
(74) Representative: Carvajal y Urquijo, Isabel

(57) **Abstract**

The invention relates to a system for consuming at least one Web service (2) provided by a provider device wherein said provider device is identified by an address or URI which is the SIP URI address. According to the invention, said Web services provider is discovered and located by means of initiating SIP sessions.

In this system:
- a user client (1) of the Web service generates a session initiation request indicating as the URI of the request the SIP URI of the provider and describing said session by means of SDP in which an interaction context is described to negotiate the consumption of said service, where said interaction context includes at least the URL from which the Web service can be invoked and a message exchange pattern MEP,
- said provider generates a session initiation response described by means of SDP including said interaction context proposed by the client or modifying it,
such that if the Web services provider is registered in that SIP network, the client accesses the service using the SIP URI of the provider.

## Description

### Field of the Invention

The present invention is encompassed within the field of telecommunications networks, and more specifically the possibility of being able to access services provided by mobile devices within such networks.

### Background of the Invention

It is well known that abbreviations and acronyms are frequently used in the field of mobile telephony. A glossary of acronyms/terms used throughout this specification is provided below:
- Interaction context: set of information needed to consume a service operation belonging to a Web services provider. This information is a set of elements defining features for accessing the service, such as for example the protocol used to access the operation, the network connection, service destination URL, service, operation and MEP.
- IETF: Internet Engineering Task Force.
- IP: Internet Protocol.
- MEP: Message Exchange Pattern. Pattern of the sequence of messages exchanged between two SOAP nodes due to the invocation of an action.
- SDP: Session Description Protocol.
- SIP: Session Initiation Protocol.
- SOAP: Simple Object Access Protocol. SOAP is an XML-based communication protocol that allows the exchange of data between heterogeneous applications; standardized by W3C.
- UDDI: Universal Description, Discovery and Integration. UDDI is a protocol for publishing Web services information.
- URI: Universal Resource Identifier.
- URL: Universal Resource Locator. Chain of characters with which a unique address is assigned to each of the information resources available in a network domain.
- W3C: World Wide Web Consortium.
- WSDL: Web Service Definition Language. WSDL is an XML-based language used to describe Web Services.
- XML: Extensible Markup Language

A Web Service is a set of protocols and standards used to create a homogenous communication infrastructure for the purpose of exchanging data between applications. A distributed architecture following an orientation to services, it consists of different applications and systems which produce and/or consume messages. The great heterogeneity of systems and platforms makes it necessary to adopt a mechanism assuring interoperability in data communication. Web Services came about for this purpose as basic blocks within a distributed architecture.

A Web service is generally made up of a series of operations. An operation is a set of messages with a common context that are exchanged by two Web service agents. The set of operations supported by a service is defined in the description thereof. Each operation defines a message exchange following a pattern and format defined in a service descriptor or contract which must be known by both agents.

A Web service publishes a specific functionality by means of standard XML protocols (usually SOAP) and provides a method for describing said functionality through service contracts, such as for example a WSDL document. The possibility of registering and searching for these services by means of a discovery mechanism such as UDDI can optionally be provided.

The descriptor of a service defines a set of operations. In turn, each operation is made up of a number of interrelated messages. These operations correspond to a specific communication pattern or MEP (Message Exchange Pattern), such as for example request/response, one-way communication, etc... The descriptors further contain information on formats of messages that are going to be exchanged and the network addresses to which the messages must be sent. This is referred to as binding with the physical layer of the communication.

On the other hand, SIP has been created by IETF, the organization responsible for protocol engineering and the Internet development division. SIP is a signaling protocol used to initiate interactive multimedia sessions between IP network users. These sessions can usually be: instant messenger, telephony, network games, contact group management, presence, etc. The signaling functions of a SIP stack are: to initiate, modify and conclude sessions and the registration and location of participants. The features of the sessions are described and the capabilities of the participants are negotiated by means of the SDP protocol.

Currently it is possible to use a mobile device as a Web service consumer, for which purpose it is necessary to create a client in the application of the terminal and consume the corresponding Web service method to obtain the desired data.

When a service operation is consumed, two aspects which may hinder or prevent interaction with such service must be taken into account. On one hand, the device housing the service may not be available at the time the communication is to be made. Another problem that may be encountered is that the identification of the service contained in its descriptor corresponds to a space or domain for which access is not available or is not known (such as for example, a private domain network).

There is currently no technical solution to the problem of the availability of services. The SIP protocol and registers enable determining availability of the device but the availability of services and the operations provided by such services is not resolved.

For example Japanese patent application JP 2004-356967 describes the reference between Web and SIP services to simulate an asynchronous messenger system in real time connected to HTTP. The object of this patent focuses on achieving the asynchronous notification of messages using the http transport protocol. Currently, WS-Notification (http://www.oasis-open.org/committees/tc home.php?wg abbrev= wsn, which claims to carry out what is proposed in this patent document but by means of Web services technology messages, is in the process of being standardized. At the time this implementation was proposed because the use of a protocol other than http was not conceived, and given its synchronous nature it was not possible to develop real-time situations. The system described in this patent application is supported on SIP to achieve the notification process in real-time and then transmit the Web service messages by the traditional method, i.e. it has a solution for the notification of events in Web services.

US patent application US 2005/0778705 and Japanese patent application JP 2003-350594, for example, also describe service provider systems which transfer information between SIP systems and web systems.

However none of the cited background documents solves the problem hereinbefore indicated with respect to the availability of services and the operations that such services provided.

### Description of the Invention

The invention relates to a system for consuming Web services by means of SIP signaling according to claim 1. Preferred embodiments of the system are defined in the dependent claims.

The objectives of the present invention are: the discovery, location and consumption of services housed in a Web services provider.

The present invention applies SIP signaling to solve the problems indicated in the foregoing regarding the availability and identification of the service.

Therefore, by means of the present invention access to services provided by mobile devices with access to IP networks is achieved by means of Web services technology using the SIP protocol as signaling.

A first aspect of the present invention relates to a system for consuming at least one Web service provided by a provider device in which:
- said provider device is identified by an address or URI which is the SIP URI address,
in which said Web services provider device is discovered and located by means of initiating SIP sessions.

Preferably, according to the system of the invention:
- a user client of said Web service generates a session initiation request indicating the SIP URI of the provider device as the URI of the request and describing the session by means of SDP in which an interaction context is described to negotiate the consumption of the service, where said interaction context includes at least the URL from which the Web service can be invoked and a message exchange pattern MEP,
- said provider generates a session initiation response described by means of SDP including said interaction context, proposed by the client or modifying it,
such that, if the Web services provider is registered in that SIP network, the user client accesses the service using the SIP URI of the device, where the service or provider is housed.

Preferably, if the Web services provider is not registered in that SIP network the SIP network informs the user client that the provider is not available.

Preferably, in addition to the URL from which the Web service can be invoked and the message exchange pattern, said interaction context also includes: protocol used to access the operation, network connection, service and operation.

A device acting as a services provider needs to be available at a network address so that clients can invoke such services and consume them. The invention provides that the address or URI identifying a device will be the SIP URI, which is the address used in a SIP network to identify a registered user and associate him/her with a physical network address where he/she is available.

The present invention thus defines a system which allows the discovery, location and consumption of the services housed in a Web services provider by means of the signaling protocol SIP and session description SDP protocol, which define the interaction context needed for the exchange of SOAP messages corresponding to the invocation of a specific operation of a Web service.

The signaling system preferably uses the contract of said service to define the nature of the session that will be initiates. The invention relates SIP session with interaction context, understood as the set of information needed for consuming a service operation belonging to a Web services provider. This information is a set of elements defining service access features such as for example: protocol used to access the operation, network connection, URL destination of the service, service, operation and MEP.

By means of the system proposed in this invention, services with dynamic network addresses can be easily located by means of the SIP registration. The presence control further allows knowing beforehand the availability of the service that is wished to be consumed.

SIP signaling is used to initiate a session that is described by means of the SDP protocol, which defines the interaction context.

The use of a specific message exchange pattern or MEP determines the life cycle of the session that is initiated for message exchange.

The same communication channel can be used for the operation for the request message and the response message, being a synchronous interaction.

It is also possible that client and provider asynchronously exchange a set of messages for the same context of the operation.

Or it may also be an asynchronous operation in which for the operation the client sends a message after which the session is interrupted.

### Brief Description of the Drawings

A set of drawings is very briefly described below which aid in better understanding the invention and are expressly related to an embodiment of said invention, presented as an illustrative but non-limiting example thereof.
Figure 1 shows a scheme of the architecture of the invention.
Figure 2 shows a first possible embodiment for the Request/Response-type message exchange pattern.
Figure 3 shows a second possible embodiment for the One-way-type message exchange pattern.
Figure 4 shows a third possible embodiment for the Generic Dialogue-type message exchange pattern.

### Description of a Preferred Embodiment of the Invention

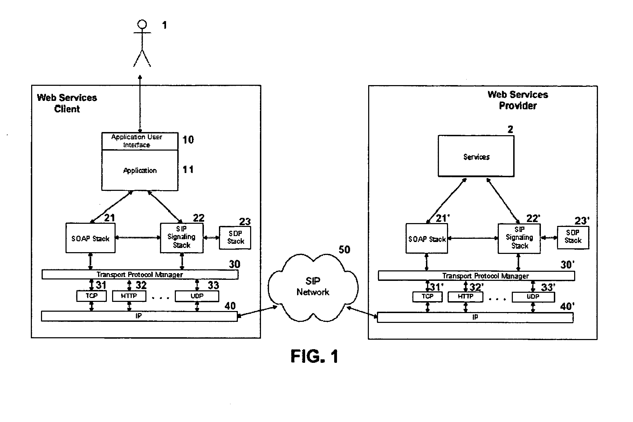

Figure 1 shows a scheme with the architecture of the present invention showing the different elements forming part of it.

At least one user client 1 who wishes to access a specific service 2 provided by a Web services provider device is part of the invention.

This Web services provider needs to be available at a network address so that the user client can invoke it. According to the present invention, it is provided that the address or URI identifying a device will be the SIP URI, which is the address, used in a SIP network 50 to identify a registered user and associate him/her with a physical network address where he/she is available. If the user is registered in that SIP network, a consumer of the service accesses it using the SIP URI. If however he/she is not, the SIP network informs the consumer of the service that the device is not available, returning the message to him/her.

Figure 1 also shows, as part of the architecture of implementing this invention, the following elements:
- a user interface 10, through which the user accesses an application 11;
- SOAP stack 21, 21', an entity made up of a series of components, each one corresponding to an implementation of the SOAP protocol or its extensions. Its purpose is to analyze incoming SOAP messages and composing outgoing SOAP messages SIP signaling stack 22, 22', the entity managing the SIP protocol signaling,
- SDP stack 23, 23', the entity managing the analysis and composition of the SDP messages,
- transport protocol manager 30, 30', the entity managing which TCP 31, 31', HTTP 32, 32', UDP 33, 33' network protocol, etc., is going to be used depending on the features of the communication;
- IP module 40, 40', the entity managing access to IP networks.

As indicated, the service provider is available at one or more network addresses associated to the device which houses it. These addresses may correspond to different network protocols (HTTP, TCP, UDP, etc...) such that any of them can be used depending on the features of the communication.

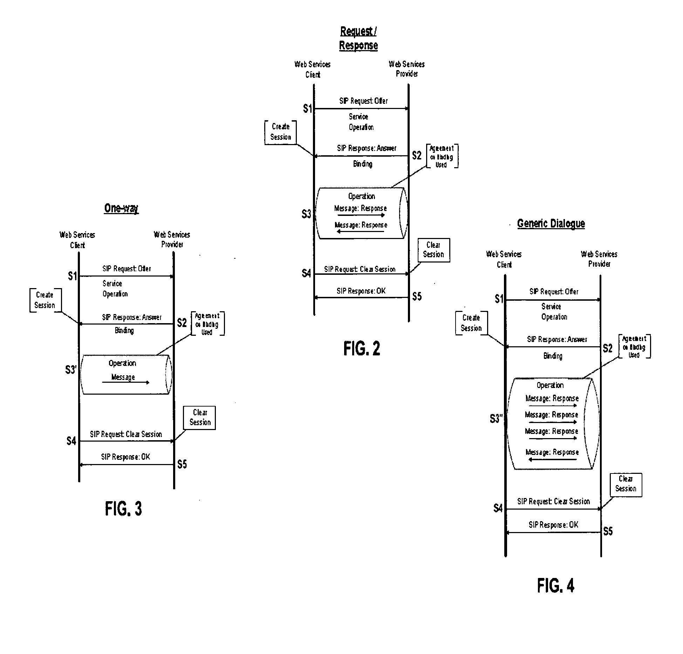

The consumer of the service does not know these addresses *a priori,* having only the SIP URI associated to the device in which the service is housed and the identification of the operation that is going to be consumed. The present invention relates SIP session with operation. SIP signaling is used to initiate a session which is described by means of the SDP protocol, which defines the interaction context (see Figures 2-4). The present invention follows the philosophy of RFC 3264: "An Offer/Answer Model with the Session Description Protocol (SDP)" applying it to the world of Web services in the following manner:

The information needed to invoke Web services is described in the interaction context which is defined in the SDP message media information. Client and provider reach an agreement on at least the following parameters which are currently needed to define the interaction context to invoke the Web service (in the event that it is determined that more parameters are needed, they may logically be incorporated):
- Service + Operation: indicates the operation that is going to be invoked to negotiate the specific protocol and port for this particular interaction. The advantage is the use of suitable protocols according to the functionality and logic involved in the operation.
- Network addresses or URL's to be used by both parties in the communication.
- Message exchange pattern corresponding to the operation that is invoked. It defines the flow of messages which will be generated when a specific service is consumed. This information is obtained directly from the service contract that both parties should be aware of. The following types of basic interactions are identified:

### * Synchronous:

- Request/Response. Request message generating a response.

### * Asynchronous:

- One-way. Sending of a single message asynchronously.
- Generic Dialogue. Set of messages among which there is a correlation, which are exchanged between both parties.

As shown in Figures 2-4, for any of these three types of basic interactions, the Web services client generates the initial SDP request indicating the following parameters (step S1):
- Service and operation to be invoked.
- Local URL.

The Web services provider generates the SDP response to the request including the URL from which the service can be invoked (step S2). All the connection network parameters (protocol, port, etc.) are thus defined.

The request (and subsequent response) must be a valid SDP message and must following the RFC 3264 guidelines. The request contains one and only one invocation of an operation. The process by means of which, the web client finds out about the operations or services displayed by the Web services provider are not part of this invention.

Each invocation of a Web service operation produces the negotiation of a session using the SIP protocol. The use of a specific message exchange pattern or MEP furthermore absolutely determines the life cycle of the session that is initiated for the message exchange. As hereinbefore described, there are three basic types of interaction which therefore correspond to three different types of sessions:
1. Request/Response. It is a synchronous interaction. The same communication channel is used for the request message and the response message. Figure 2 describes the sequence of actions are triggered in this type of interaction (step S3).
2. One-way. It is an asynchronous interaction in which the consumer of the service sends a message, after which the session is interrupted. Figure 3 describes the sequence of corresponding actions in this type of interaction (step S3')
3. Generic Dialogue: set of messages which are asynchronously exchanged within the same operation context. Figure 4 corresponds to the sequence of actions occurring in this case (step S3").

In any of these cases, the Web services client than generates a session release request (step S4), to which the Web services provider generates the corresponding response (step S5).

## Claims

1. A system for consuming at least one Web service (2) provided by a provider device wherein:
- said provider device is identified by an address or URI which is the SIP URI address;
**characterized in that** said Web services provider device is discovered and located by means of initiating SIP sessions.

2. A system according to claim 1, **characterized in that** in said system:
- a user client (1) of said Web service generates a session initiation request indicating as the URI of the request the SIP URI of the provider device and describing said session by means of SDP in which an interaction context is described to negotiate the consumption of said service, where said interaction context includes at least the URL from which the Web service can be invoked and a message exchange pattern MEP,
- said provider generates a session initiation response described by means of SDP including said interaction context proposed by the client or modifying it,
such that if the Web services provider is registered **in that** SIP network, the user client accesses the service using the SIP URI of the provider device.

3. A system according to any one of the previous claims, **characterized in that** if the Web services provider is not registered **in that** SIP network, the SIP network informs the user client that the provider is not available.

4. A system according to any one of the previous claims, **characterized in that** in addition to the URL from which the Web service can be invoked and the message exchange pattern, said interaction context includes: protocol used to access the operation, network connection, service and operation.

5. A system according to any of claims 1-4, wherein for the operation the same communication channel is used for the request message and the response message, being a synchronous interaction.

6. A system according to any of claims 1-4, wherein for the same operation context client and provider asynchronously exchange a set of messages.

7. A system according to any of claims 1-4, wherein for the operation the client sends a message after which the session is interrupted, being an asynchronous interaction.
